# EUROPEAN PATENT APPLICATION

(11) **EP 4 850 703 A1**
(43) Date of publication of application: **09.12.2026**
(21) Application number: 25748045.9
(22) Date of filing: 05.02.2025
(51) Int. Cl.: A61K 103/40, B01D 11/02, B01D 59/24

(54) **METHOD FOR EXTRACTING DECAY DAUGHTER OF THORIUM**

(30) Priority: 01.02.2024 CN 202410143254
(71) Applicant: Beijing Sinotau International Pharmaceutical Technology Co., Ltd., Beijing 100176 (CN); Institute Of Nuclear Physics And Chemistry, China Academy of Engineering Physics, Mianyang, Sichuan 621999 (CN)
(72) Inventor: LIAO, Wei, Mianyang, Sichuan 621999 (CN); ZHUO, Liangang, Mianyang, Sichuan 621999 (CN); XU, Xinsheng, Beijing 100176 (CN); YANG, Yuchuan, Mianyang, Sichuan 621999 (CN); YANG, Guogui, Beijing 100176 (CN); TU, Jun, Mianyang, Sichuan 621999 (CN)
(74) Representative: Keller Schneider Patentanwaltsgesellschaft mbH
(86) International application number: PCT/CN2025/075730
(87) International publication number: WO 2025/162485

(57) **Abstract**

The present application provides a method for extracting a decay daughter of thorium, wherein the method comprises: a leaching step of mixing thorium hydroxide particles with a leaching solution to dissolve decay daughters of thorium in the thorium hydroxide particles into the leaching solution; and a solid-liquid separation step of separating the thorium hydroxide particles mixed with the leaching solution from the liquid to obtain a solution containing the decay daughters of thorium. The present application can achieve high leaching rate, with multiple extractions reaching a leaching rate as high as 88%.

## Description

### TECHNICAL FIELD

The present application relates to the field of radioactive elements, and specifically to a method for extracting decay daughters of thorium, and more specifically to a method for extracting decay daughters from thorium hydroxide particles.

### BACKGROUND

In recent years, the field of alpha therapeutic radioisotope drugs has been rapidly emerging, and extensive research work on radiopharmaceuticals and nuclide preparation for alpha nuclides has been widely carried out. Among them, ²¹²Pb (²¹²Bi) is an important representative of emerging alpha nuclides, and its daughters ²¹²Bi (6.05 MeV) and ²¹²Po (8.78 MeV), as alpha emitters that ultimately produce toxicity (efficacy), exhibit excellent cytotoxicity. At the same time, the production of this nuclide does not depend on long-term national nuclide reserves and can be obtained by extraction from natural thorium. In the natural decay chain of ²³²Th, ²¹²Pb and ²¹²Bi in this chain are produced by continuous decay from ²³²Th.

Among them, ²³²Th is the main isotopic component of natural thorium. ²²⁸Th is also distributed in natural thorium, or obtained by other enrichment means. From known production methods of ²¹²Pb, the preparation of ²¹²Pb by stepwise extraction of nuclides on the decay chain from natural ²³²Th is the most important production method of ²¹²Pb. However, since the half-life of ²³²Th is extremely long (1.4 × 10¹⁰ years), ²³²Th stored for 5 years contains only 2 × 10⁻¹⁰ (w/w) of ²²⁸Ra. Therefore, how to extract ²²⁸Ra from a large amount of ²³²Th is the starting point for all ²¹²Pb production and the most critical technical difficulty. Known methods for extracting ²²⁸Ra from ²³²Th include: barium coprecipitation method, selective radium resin extraction method, etc. These methods in the prior art each have their own advantages and also have their own disadvantages. For example, the barium coprecipitation method generates a high amount of waste liquid per single operation; the selective radium resin extraction method requires expensive selective resins. Moreover, both methods require long-term storage of a large amount of strongly acidic Th(IV) solutions.

### SUMMARY OF THE INVENTION

The technical problem to be solved by the present application is to address the deficiencies in the background, and to provide a method for extracting decay daughters of thorium.

The technical solution of the present application is as follows:
A method for extracting decay daughters of thorium, wherein the method comprises:
a leaching step: mixing thorium hydroxide particles with a leaching solution, so that the decay daughters of thorium in the thorium hydroxide particles are dissolved in the leaching solution; and
a solid-liquid separation step: separating the thorium hydroxide particles mixed with the leaching solution from the liquid to obtain a solution containing the decay daughters of thorium.

In some embodiments, prior to the leaching step, aging treatment is carried out, wherein the aging step comprises: placing the thorium hydroxide particles for a period of time to enrich the decay daughters of thorium.

In some embodiments, the leaching solution is selected from one or more of water, nitrate salt solutions, hydrochloride salt solutions, sodium salt solutions, potassium salt solutions, calcium salt solutions, and ammonium salt solutions.

In some embodiments, the nitrate salt is selected from one or more of sodium nitrate, potassium nitrate, silver nitrate, magnesium nitrate, calcium nitrate, copper nitrate, iron nitrate, zinc nitrate, barium nitrate, aluminum nitrate, cesium nitrate, ammonium nitrate, and ferrous nitrate;
the hydrochloride salt is selected from one or more of sodium chloride, potassium chloride, magnesium chloride, calcium chloride, copper chloride, iron chloride, zinc chloride, barium chloride, aluminum chloride, cesium chloride, ammonium chloride, and ferrous chloride;
the sodium salt is selected from one or more of sodium chloride, sodium bicarbonate, sodium bisulfate, sodium nitrate, sodium hydrogen phosphate, sodium dihydrogen phosphate, sodium sulfide, sodium sulfite, sodium bisulfite, sodium nitrite, sodium ferrate, sodium fluoride, sodium bromide, sodium iodide, sodium formate, sodium acetate, and sodium oxalate;
the potassium salt is selected from one or more of potassium chloride, potassium bicarbonate, potassium bisulfate, potassium nitrate, potassium hydrogen phosphate, potassium dihydrogen phosphate, potassium sulfide, potassium sulfite, potassium bisulfite, potassium nitrite, potassium ferrate, potassium fluoride, potassium bromide, potassium iodide, potassium formate, potassium acetate, and potassium oxalate;
the calcium salt is selected from one or more of calcium chloride, calcium bicarbonate, calcium bisulfate, calcium nitrate, calcium hydrogen phosphate, calcium dihydrogen phosphate, calcium bisulfite, calcium nitrite, calcium bromide, calcium iodide, calcium formate, and calcium acetate;
the ammonium salt is selected from one or more of ammonium chloride, ammonium bicarbonate, ammonium bisulfate, ammonium nitrate, ammonium hydrogen phosphate, ammonium dihydrogen phosphate, ammonium sulfide, ammonium sulfite, ammonium bisulfite, ammonium nitrite, ammonium ferrate, ammonium fluoride, ammonium bromide, ammonium iodide, ammonium formate, ammonium acetate, and ammonium oxalate.

In some embodiments, the leaching solution is a sodium chloride solution and/or a sodium nitrate solution.

In some embodiments, the pH of the leaching solution is 4 to 12.

In some embodiments, the pH of the leaching solution is 6 to 8.

In some embodiments, relative to 1 volume of the thorium hydroxide particles, the leaching solution is 0.5 to 20 volumes.

In some embodiments, relative to 1 volume of the thorium hydroxide particles, the leaching solution is 1 to 3 volumes.

In some embodiments, the leaching step and the solid-liquid separation step are repeated to further extract the decay daughters.

In some embodiments, the thorium hydroxide particles are prepared as follows:
adding a base containing hydroxide ions or an aqueous solution thereof to a solution containing thorium ions to obtain a mixed solution, adjusting the pH of the mixed solution to 4 to 14, and after solid-liquid separation, obtaining the thorium hydroxide particles.

In some embodiments, the diameter of the thorium hydroxide particles is 100 nm to 1 mm.

In some embodiments, the pH of the mixed solution is 4 to 10.

In some embodiments, the base containing hydroxide ions is selected from one or more of aqueous ammonia, sodium hydroxide, calcium hydroxide, potassium hydroxide, barium hydroxide, and cesium hydroxide.

In some embodiments, the base containing hydroxide ions is sodium hydroxide.

In some embodiments, a method for the solid-liquid separation is selected from one or more of filtration, centrifugation, decantation, or natural sedimentation.

In some embodiments, the method for the solid-liquid separation is filtration.

The prior art has methods that utilize special crown ether resins to selectively adsorb Ra(II) without adsorbing Th(IV) for Ra/Th separation (Ra selective adsorption resin method), or methods that utilize coprecipitation of Ba(II) of the same group with Ra(II) to enrich Ra(II) from Th(IV) (BaSO₄ coprecipitation method). These methods in the prior art each have their own advantages and disadvantages. For example, the barium coprecipitation method generates a high amount of waste liquid per single operation; the selective radium resin extraction method requires expensive selective resins, and both methods require long-term storage of a large amount of strongly acidic Th(IV) solutions.

In order to solve these problems, the applicant of the present application has made a large number of attempts and innovations, and has summarized from practice the characteristics that the decay daughters of thorium are more readily soluble in aqueous solutions, while thorium ions (Th⁴⁺) in the solid have poor solubility, thereby selectively extracting the decay daughters into the aqueous solution.

Furthermore, the applicant of the present application has found, in screening a large number of thorium solids, that thorium hydroxide contains a relatively high proportion of water, and this characteristic can greatly increase the migration rate of the decay daughters, quickly completing the migration of the decay daughters from the solid phase to the liquid phase.

In addition, since the extraction process does not affect the chemical form and morphology of thorium hydroxide, the thorium hydroxide particles can be stored in aqueous solution for a long period of time, and the decay daughters can be repeatedly extracted from the thorium hydroxide.

At the same time, in order to increase the contact area between thorium hydroxide and the leaching solution, the present application prepares thorium hydroxide into particles, further improving the leaching rate.

The methods in the prior art (Ra selective adsorption resin method and BaSO₄ coprecipitation method) require long-term storage of strongly acidic Th(IV) solutions, whereas the thorium hydroxide particle morphology stored for a long period of time in the present application is neutral wet solid, which is more suitable for large-scale storage.

The extraction operation process of the method of the present application is simple, which is conducive to achieving large-scale production, and thorium hydroxide is easy to preserve. The most important point is that the method has high efficiency in extracting decay daughters and low thorium element residue.

The present application is applicable to the direct extraction of ²²⁸Ra from natural thorium, the extraction of ²²⁴Ra from natural thorium containing ²²⁸Th, and the extraction of ²²⁴Ra from natural thorium containing ²²⁸Th.

When the method of the present application is used for extracting radium ions (Ra²⁺), the radium ions (Ra²⁺) are more readily soluble in aqueous solutions, and can quickly complete the migration from the solid phase to the liquid phase, with high efficiency and low thorium residue. For example, in a single-step operation, the ratio of ²³²Th in the ^{228/224}Ra solution obtained from natural thorium increases to 10⁻⁴~10⁻² (w/w). The thorium hydroxide particles of the present application have high water content, which can effectively achieve the migration of radium ions (Ra²⁺) in the solid phase, achieving a high leaching rate. For example, the leaching rate of the first leaching can reach 52% or more, and the leaching rate of multiple leachings can reach 88% or more.

The present application completes, for the first time, a solution for extracting radium ions (Ra²⁺) from solid Th compounds, which can effectively reduce the difficulty of storage.

### BRIEF DESCRIPTION OF THE DRAWINGS

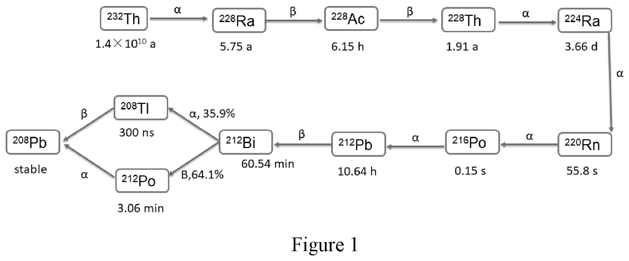

Figure 1 shows the decay chain of ²³²Th.

### DETAIL DESCRIPTION OF THE INVENTION

The present application will be further described below with reference to the examples. It should be understood that the examples are only used to further illustrate and explain the present application, and are not intended to limit the present application.

Unless otherwise defined, technical and scientific terms in this specification have the same meanings as commonly understood by those skilled in the art. Although methods and materials similar or equivalent to those described herein can be used in experiments or practical applications, the materials and methods are described below. In case of conflict, this specification, including the definitions therein, shall prevail. In addition, the materials, methods, and examples are provided for illustration only and are not restrictive. The present application will be further described below with reference to the specific examples, but it is not intended to limit the scope of the present application.

In the present application, the source of the thorium hydroxide particles is not limited, and they can be obtained by commercial purchase or by self-preparation. Those skilled in the art can select the manner of obtaining thorium hydroxide particles based on needs. For example, in some acquisition methods, they can be obtained by self-preparation, such as using thorium salts to react with a base or concentrated aqueous ammonia to obtain thorium hydroxide particle precipitates.

In the present application, the decay daughters of thorium refer to substances obtained by decay of ²³²Th, as shown in Figure 1, which can be one or more of ²²⁸Ac, ²²⁸Ra, ²²⁸Th, ²²⁴Ra, ²²⁰Rn, ²¹⁶Po, ²¹²Pb, ²¹²Bi, and ²⁰⁸Pb. The decay daughters of thorium have different properties and different applications, and those skilled in the art can select suitable methods to extract the above decay daughters according to actual needs.

The present application provides a method for extracting decay daughters of thorium from thorium hydroxide particles, wherein the method comprises: a leaching step: mixing thorium hydroxide particles with a leaching solution, so that the decay daughters of thorium in the thorium hydroxide particles are dissolved in the leaching solution; and a solid-liquid separation step: separating the thorium hydroxide particles mixed with the leaching solution from the liquid to obtain a solution containing the decay daughters of thorium.

In some embodiments of the present application, before performing leaching, aging treatment is carried out, wherein the aging step comprises: placing the thorium hydroxide particles for a period of time to enrich the decay daughters of thorium, and after the decay daughters reach a certain concentration, subjecting the aged thorium hydroxide particles to leaching.

In some embodiments of the present application, the aging treatment may also not be performed, and the decay daughters are directly subjected to leaching.

In the present application, whether to perform aging treatment is mainly determined according to actual needs. Those skilled in the art can understand that after aging treatment, the concentration of the decay daughters will further increase. However, even without aging treatment, the method of the present application can still effectively extract the decay daughters.

In the present application, the inventors have found that decay daughters of thorium are more readily soluble in aqueous solutions, while thorium ions (Th⁴⁺) in thorium hydroxide particles are not readily soluble in aqueous solutions, so the decay daughters can be selectively extracted into the aqueous solution, for example, ²²⁸Ra and/or ²²⁴Ra can be selectively extracted into the aqueous solution.

In the present application, the leaching solution refers to a solution that readily dissolves the decay daughters of thorium but does not readily dissolve the thorium ions (Th⁴⁺) in the thorium hydroxide particles, i.e., does not readily dissolve Th(IV) in the thorium hydroxide particles.

In the present application, the morphology of the thorium hydroxide particles is a neutral wet solid, containing a relatively high proportion of water, which can increase the migration rate of radium ions, and can quickly complete the migration from the solid phase to the liquid phase. Moreover, since the extraction process does not affect the chemical form and morphology of thorium hydroxide, the thorium hydroxide particles can be stored in aqueous solution for a long period of time, and radium can be repeatedly extracted from the thorium hydroxide particles.

In some embodiments of the present application, the decay daughters are selected from one or more of ²²⁸Ac, ²²⁸Ra, ²²⁴Ra, ²²⁰Rn, ²¹²Pb, and ²¹²Bi; preferably ²²⁸Ra and/or ²²⁴Ra.

In the present application, compared with other decay daughters, ²²⁸Ra and/or ²²⁴Ra have relatively long half-lives, are easy to undergo more complex purification processes, and are generally used as key intermediate nuclides independently in the production of medical isotopes ²¹²Pb/²¹²Bi.

In the present application, the leaching rate refers to the proportion of the decay daughters to be leached that dissolve into the leaching solution after mixing the thorium hydroxide particles with the leaching solution.

In the present application, the leaching rate is calculated as follows:
Method for measuring ²²⁴Ra content: taking an appropriate amount of the sample, directly measuring it with a high-purity germanium (HPGe) gamma spectrometer, and determining the ²²⁴Ra content by counting the energy peak at 240.0 keV;
Method for measuring ²²⁸Ra content: taking an appropriate amount of the sample, placing the sample to be measured for not less than 24 h, and after ²²⁸Ra and its daughter ²²⁸Ac reach equilibrium, directly measuring it with a high-purity germanium (HPGe) gamma spectrometer, and determining the ²²⁸Ac content by counting the energy peak at 911.1 keV, wherein the activity of ²²⁸Ra is equal to the activity of ²²⁸Ac. 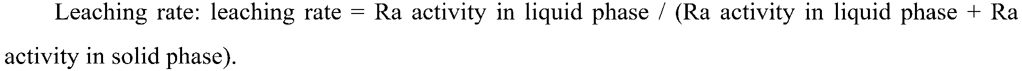 Leaching rate: leaching rate = Ra activity in liquid phase / (Ra activity in liquid phase + Ra activity in solid phase).

In the present application, the inventors have found that the pH of the leaching solution has a great influence on the leaching rate. When the pH does not meet specific conditions, the leaching rate is very low or substantially zero. The pH of the leaching solution is 4 to 12; for example, the pH of the leaching solution can be 4, 5, 6, 7, 8, 9, 10, 11, 12, or any range therebetween.

In some preferred embodiments of the present application, the pH of the leaching solution is 6 to 8. The inventors have found that when the pH of the leaching solution is 6 to 8, the leaching rate is the highest, and the leaching rates of both ²²⁸Ra and/or ²²⁴Ra are the highest.

In the present application, the inventors have found that the choice of the leaching solution can further affect the leaching rate. For example, some insoluble salts or salts that cause precipitation of Ra cannot be used as the leaching solution, such as sodium carbonate, sodium sulfate, sodium phosphate, potassium carbonate, potassium sulfate, potassium phosphate, calcium carbonate, calcium sulfate, calcium phosphate, calcium sulfide, calcium sulfite, and calcium oxalate. However, some leaching solutions can contribute to the leaching effect of ²²⁸Ra and/or ²²⁴Ra. The leaching solution is selected from one or more of water, nitrate salt solutions, hydrochloride salt solutions, sodium salt solutions, potassium salt solutions, calcium salt solutions, and ammonium salt solutions.

In some embodiments of the present application, the nitrate salt is selected from one or more of sodium nitrate, potassium nitrate, silver nitrate, magnesium nitrate, calcium nitrate, copper nitrate, iron nitrate, zinc nitrate, barium nitrate, aluminum nitrate, cesium nitrate, ammonium nitrate, and ferrous nitrate.

In some embodiments of the present application, the hydrochloride salt is selected from one or more of sodium chloride, potassium chloride, magnesium chloride, calcium chloride, copper chloride, iron chloride, zinc chloride, barium chloride, aluminum chloride, cesium chloride, ammonium chloride, and ferrous chloride.

In some embodiments of the present application, the sodium salt is selected from one or more of sodium chloride, sodium bicarbonate, sodium bisulfate, sodium nitrate, sodium hydrogen phosphate, sodium dihydrogen phosphate, sodium sulfide, sodium sulfite, sodium bisulfite, sodium nitrite, sodium ferrate, sodium fluoride, sodium bromide, sodium iodide, sodium formate, sodium acetate, and sodium oxalate.

In some embodiments of the present application, the potassium salt is selected from one or more of potassium chloride, potassium bicarbonate, potassium bisulfate, potassium nitrate, potassium hydrogen phosphate, potassium dihydrogen phosphate, potassium sulfide, potassium sulfite, potassium bisulfite, potassium nitrite, potassium ferrate, potassium fluoride, potassium bromide, potassium iodide, potassium formate, potassium acetate, and potassium oxalate.

In some embodiments of the present application, the calcium salt is selected from one or more of calcium chloride, calcium bicarbonate, calcium bisulfate, calcium nitrate, calcium hydrogen phosphate, calcium dihydrogen phosphate, calcium bisulfite, calcium nitrite, calcium bromide, calcium iodide, calcium formate, and calcium acetate.

In some embodiments of the present application, the ammonium salt is selected from one or more of ammonium chloride, ammonium bicarbonate, ammonium bisulfate, ammonium nitrate, ammonium hydrogen phosphate, ammonium dihydrogen phosphate, ammonium sulfide, ammonium sulfite, ammonium bisulfite, ammonium nitrite, ammonium ferrate, ammonium fluoride, ammonium bromide, ammonium iodide, ammonium formate, ammonium acetate, and ammonium oxalate.

In some preferred embodiments of the present application, the leaching solution is a sodium chloride solution and/or a sodium nitrate solution.

In some embodiments of the present application, relative to 1 volume of the thorium hydroxide particles, the leaching solution is 0.5 to 20 volumes, preferably 1 to 3 volumes; for example, relative to 1 volume of the thorium hydroxide particles, the leaching solution can be 0.5 volumes, 1 volume, 2 volumes, 3 volumes, 4 volumes, 5 volumes, 6 volumes, 7 volumes, 8 volumes, 9 volumes, 10 volumes, 11 volumes, 12 volumes, 13 volumes, 14 volumes, 15 volumes, 16 volumes, 17 volumes, 18 volumes, 19 volumes, 20 volumes, or any range therebetween. A further increase in the volume of the leaching solution not only does not improve the leaching rate, but also increases the cost of raw materials.

In some embodiments of the present application, the leaching step and the solid-liquid separation step are repeated to further extract the decay daughters. The present application can repeat the above steps multiple times, all of which can further improve the leaching rate. Those skilled in the art can select the number of repetitions according to actual needs. Among them, repeating the leaching step and the solid-liquid separation step can be divided into multiple leachings and multiple rounds of leaching. Among them, multiple rounds of leaching refer to repeating the leaching step and the solid-liquid separation step after the aging step to further extract the decay daughters. Multiple leachings refer to directly repeating the leaching step and the solid-liquid separation step to further extract the decay daughters. Those skilled in the art can understand that multiple leachings can be carried out in one round of leaching. Among them, the number of leachings and the number of rounds can be selected according to actual needs.

In the present application, multiple leachings refer to repeatedly performing the leaching step followed by the solid-liquid separation step after one aging step, or repeatedly performing the leaching step followed by the solid-liquid separation step, i.e., performing multiple leachings in one round of leaching.

In the present application, multiple rounds of leaching refer to completing a complete aging step, leaching step, and solid-liquid separation step as one round of leaching, or completing a complete leaching step and solid-liquid separation step as one round of leaching; multiple rounds of leaching refer to repeatedly performing "one round of leaching".

In some embodiments of the present application, prior to the leaching step, aging treatment is carried out.

In some embodiments of the present application, the thorium hydroxide particles are prepared as follows: adding a base containing hydroxide ions or an aqueous solution thereof to a solution containing thorium ions to obtain a mixed solution, adjusting the pH of the mixed solution to 4 to 14, and after solid-liquid separation, obtaining the thorium hydroxide particles.

In the present application, the source of thorium ions is not limited, as long as it can be known to those skilled in the art. For example, the solution containing thorium ions can be the solution of thorium fluoride, thorium nitrate, thorium oxalate, or thorium phosphate, or other solutions containing thorium ions.

In the present application, the inventors have found that the pH of the mixed solution can directly affect the formation of thorium hydroxide particles. When the pH of the mixed solution does not meet specific conditions, it is difficult to produce thorium hydroxide particles. For example, when the acidity increases to a certain level, precipitation cannot occur. Among them, the pH of the mixed solution can be 4, 5, 6, 7, 8, 9, 10, 11, 12, 13, 14, or any range therebetween.

In some preferred embodiments of the present application, the pH of the mixed solution is 4 to 10.

In some embodiments of the present application, the diameter of the thorium hydroxide particles is 100 nm to 1 mm; for example, the diameter of the thorium hydroxide particles can be 100 nm, 200 nm, 300 nm, 400 nm, 500 nm, 600 nm, 700 nm, 800 nm, 900 nm, 1000 nm, 0.01 mm, 0.1 mm, 1 mm, or any range therebetween.

In the present application, the source of the base containing hydroxide ions is not limited in any way, as long as it can be known to those skilled in the art and meets actual needs. Among them, the base containing hydroxide ions is selected from one or more of aqueous ammonia, sodium hydroxide, calcium hydroxide, potassium hydroxide, barium hydroxide, and cesium hydroxide; preferably sodium hydroxide.

In some embodiments of the present application, the method for the solid-liquid separation method is not limited in any way, as long as the purpose is achieved. Those skilled in the art can select the required method for the solid-liquid separation according to actual needs, for example, it can be one or more of filtration, centrifugation, decantation, and natural sedimentation; preferably filtration.

In a specific embodiment of the present application, the thorium hydroxide particles are prepared as follows: thorium nitrate hexahydrate is taken and dissolved in water; sodium hydroxide solution is added dropwise, and the pH value of the solution is measured with a pH meter; samples are taken under different pH conditions, and the pH is adjusted to neutrality to prepare thorium hydroxide particles.

In a specific embodiment of the present application, the method for extracting decay daughters from thorium hydroxide particles is as follows: sodium nitrate solution is added to thorium hydroxide particles, and mixed uniformly, and after centrifugation, the ²²⁴Ra content in the liquid phase and the solid are respectively measured, and the leaching rate is calculated.

In a specific embodiment of the present application, thorium nitrate hexahydrate is taken and dissolved in water; sodium hydroxide solution is added dropwise, and the pH value of the solution is measured with a pH meter; samples are taken under different pH conditions, and the pH is adjusted to neutrality to prepare thorium hydroxide particles, and after centrifugation, the ²²⁴Ra content in the liquid phase and the solid are respectively measured, and the first leaching rate is calculated; sodium nitrate solution is added to the thorium hydroxide particles, and mixed uniformly, and after centrifugation, the ²²⁴Ra content in the liquid phase (combined with the first leachate) and the solid phase are respectively measured, and the second leaching rate is calculated; 1 mL of sodium nitrate solution at pH 7 is added to the thorium hydroxide particles, and mixed uniformly, and after centrifugation, the ²²⁴Ra content in the liquid phase (combined with the first and second leachate) and the solid phase are respectively measured, and the third leaching rate is calculated.

The extraction operation process of the method of the present application is simple, which is conducive to achieving large-scale production, and thorium hydroxide is easy to preserve. The method of the present application has high efficiency in extracting radium and low thorium residue. For example, in a single-step operation, the ratio of ²³²Th in the ^{228/224}Ra solution obtained from natural thorium increases to 10⁻⁴~10⁻² (w/w).

The present application is applicable to the direct extraction of ²²⁸Ra from natural thorium, the extraction of ²²⁴Ra from natural thorium containing ²²⁸Th, and the extraction of ²²⁴Ra from natural thorium containing ²²⁸Th.

### Examples

Example 1 Thorium hydroxide particles prepared under different pH conditions
1) 10.4 g of thorium nitrate hexahydrate was taken and dissolved in 30 mL of water;
2) with stirring, 1.72 M sodium hydroxide solution was added dropwise, and the pH value of the solution was measured with a pH meter;
3) samples of about 1.5 mL were taken under different pH conditions according to Table 1 below (Examples 1-10 differ only in the pH during the preparation of thorium hydroxide particles), and the pH was adjusted to neutrality to prepare thorium hydroxide particles, and after centrifugation, the ²²⁴Ra content in the liquid phase and the solid phase were respectively measured, and the first leaching rate was calculated;
4) 1 mL of sodium nitrate solution at pH 7 was added to the solid, and mixed uniformly, and after centrifugation, the ²²⁴Ra content in the liquid phase (combined with the first leachate) and the solid phase were respectively measured, and the second leaching rate was calculated;
5) 1 mL of sodium nitrate solution at pH 7 was added to the solid, and mixed uniformly, and after centrifugation, the ²²⁴Ra content in the liquid phase and the solid phase were respectively measured, and the third leaching rate was calculated;
6) The ²³²Th residual amount in the combined solution was measured.

Examples 2-10 differ from Example 1 only in the pH during the preparation of thorium hydroxide particles, as specifically shown in Table 1, and the rest are the same as Example 1.

In this example, multiple leachings are continuous operations in time. In order to more effectively reflect the overall efficiency of multiple extractions, the "second leaching rate" in the following calculation formula includes the "first leaching rate", and the "third leaching rate" includes the "second leaching rate". The leaching rates for multiple leachings are calculated as follows: 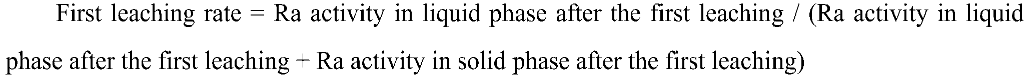 First leaching rate = Ra activity in liquid phase after the first leaching / (Ra activity in liquid phase after the first leaching + Ra activity in solid phase after the first leaching) 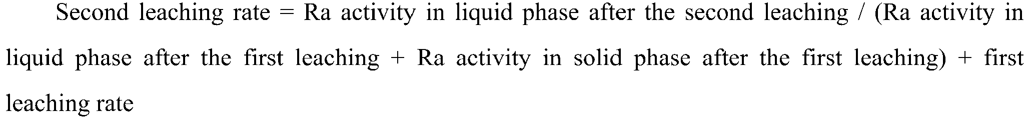 Second leaching rate = Ra activity in liquid phase after the second leaching / (Ra activity in liquid phase after the first leaching + Ra activity in solid phase after the first leaching) + first leaching rate 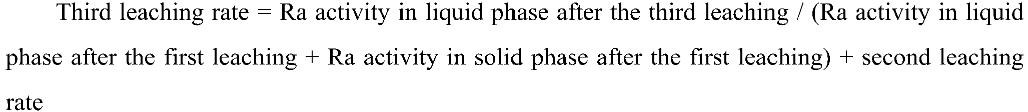 Third leaching rate = Ra activity in liquid phase after the third leaching / (Ra activity in liquid phase after the first leaching + Ra activity in solid phase after the first leaching) + second leaching rate

**Table 1**

| Serial No. | pH during preparation of thorium hydroxide particles | First leaching rate | Second leaching rate | Third leaching rate | ²³²Th residual amount/ppb |
|---|---|---|---|---|---|
| Example 1 | <3.73 | No precipitation | \ | \ | \ |
| Example 2 | 4.77 | 48.94% | 65.96% | 72.30% | 18.22 |
| Example 3 | 4.99 | 45.91% | 64.93% | 79.82% | 12.05 |
| Example 4 | 5.21 | 52.31% | 72.59% | 87.12% | 7.25 |
| Example 5 | 5.49 | 47.30% | 77.05% | 88.09% | 3.79 |
| Example 6 | 6.19 | 50.60% | 73.26% | 76.48% | 2.48 |
| Example 7 | 8.14 | 48.18% | 75.15% | 82.07% | 0.87 |
| Example 8 | 9.32 | 47.23% | 73.33% | 83.52% | 1.19 |
| Example 9 | 10.7 | 40.38% | 71.13% | 87.56% | 3.81 |
| Example 10 | 12.2 | 37.42% | 69.71% | 82.92% | 1.93 |

It can be seen from Table 1 that at pH < 3.7, thorium ions cannot produce thorium hydroxide particle precipitates, and as the acidity decreases, particle precipitates are produced. After three leachings, the leaching rates of thorium hydroxide particles obtained at pH 4.77 to 12.2 are 72% to 88%. Among them, the thorium hydroxide particle precipitates prepared under weakly alkaline conditions (pH 10.7, 12.2) have significantly lower leaching rates in the first leaching, which may be due to the influence of residual alkali in the thorium hydroxide particles. In the second and third leachings, their leaching rates reach levels similar to those of the thorium hydroxide particles prepared in Examples 6-7.

### Examples 11-18

### Example 11

1) The thorium hydroxide particles prepared in Example 7 were taken and weighed, and a leaching solution was added at a weight ratio of 1:1. The leaching solution was a sodium nitrate solution, and the pH of the leaching solution was shown in Table 2 (Examples 11-18 differ only in the pH of the leaching solution, wherein the pH is adjusted with nitric acid or sodium hydroxide);
2) after mixing uniformly, centrifugation was performed, and the ²²⁴Ra content in the liquid phase and the solid phase were respectively measured, and the first round leaching rate was calculated;
3) the same leaching solution as in step 1) was added again to the thorium hydroxide particles, mixed uniformly, and allowed to stand for about 7 days. After centrifugation, the ²²⁴Ra content in the liquid phase and the solid phase were respectively measured, and the second round leaching rate was calculated.

In this example, the multiple round leaching rates are calculated as follows: 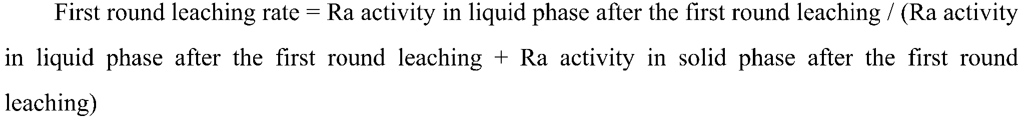 First round leaching rate = Ra activity in liquid phase after the first round leaching / (Ra activity in liquid phase after the first round leaching + Ra activity in solid phase after the first round leaching) 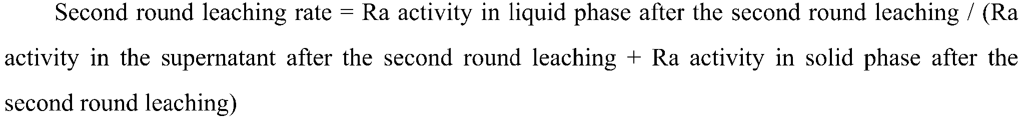 Second round leaching rate = Ra activity in liquid phase after the second round leaching / (Ra activity in the supernatant after the second round leaching + Ra activity in solid phase after the second round leaching)

Examples 12-18 differ from Example 11 only in the pH of the leaching solution, wherein the pH is adjusted with nitric acid or sodium hydroxide, as specifically shown in Table 2, and the rest are the same as Example 11.

**Table 2**

| Example | pH of leaching solution | First round leaching rate | Second round leaching rate |
|---|---|---|---|
| Example 11 | 4.67 | 50.44% | / |
| Example 12 | 6.35 | 55.11% | / |
| Example 13 | 6.92 | 52.83% | 50.32% |
| Example 14 | 8.98 | 32.58% | 45.90% |
| Example 15 | 9.44 | 22.33% | 46.15% |
| Example 16 | 10.09 | 28.93% | 27.03% |
| Example 17 | 10.76 | 7.80% | 0.00% |
| Example 18 | 12.08 | 0.00% | 0.00% |

It can be seen from Table 2 that when leaching the thorium hydroxide particles of Example 7 with leaching solutions of different pH, under weakly alkaline conditions (pH 10.76, 12.08), the leaching rates are very low, especially at pH 12.8 where leaching is almost impossible. The optimal leaching rates are at pH 6.35 and pH 6.92, so it is considered that pH 6 to 8 is the optimal leaching solution range. It can be seen from Examples 13-18 that after performing the second round of leaching, the leaching rate does not decrease.

### Examples 19-34 Leaching with different salt solutions

### Example 19

1) The thorium hydroxide particles prepared in Example 7 were taken and weighed, and a leaching solution was added at a weight ratio of 1:1. The pH of the leaching solution was 6-7, and the leaching solution was the salt solution specified in Table 3. After mixing uniformly, it was allowed to stand for one week;
2) after mixing uniformly, centrifugation was performed, and the ²²⁴Ra content in the liquid phase and the solid were respectively measured, and the leaching rate was calculated.

Examples 20-34 differ from Example 19 only in the leaching solution, as specifically shown in Table 3, and the rest are the same as Example 19.

**Table 3**

| | Leaching solution (salt solution) | ²²⁴Ra leaching rate |
|---|---|---|
| Example 19 | MgCl₂ | 64.54% |
| Example 20 | NaNO₃ | 72.54% |
| Example 21 | KNO₃ | 50.29% |
| Example 22 | NaOAc | 42.37% |
| Example 23 | NaCl | 72.13% |
| Example 24 | NH₄Cl | 62.28% |
| Example 25 | CaCl₂ | 70.76% |
| Example 26 | Sr(NO₃)₂ | 56.84% |
| Example 27 | KCl | 71.38% |
| Example 28 | BaCl₂ | 52.23% |
| Example 29 | NaI | 53.81% |
| Example 30 | KBr | 64.36% |
| Example 31 | MgCl₂+NaCl | 47.53% |
| Example 32 | NH₄NO₃+CaCl₂ | 62.25% |
| Example 33 | NH₄OAc+KBr | 54.94% |
| Example 34 | NaI+KCl | 57.51% |

### Example 35 Single round multiple leachings of ²²⁸Ra from thorium hydroxide particles

1) 1 L of a 200 g/L natural thorium nitrate solution was taken, and 2.2 mol/L sodium hydroxide solution was added to the solution until the pH of the solution reached 6-8. After filtration, about 1 L of liquid was removed, yielding about 0.5 L of thorium hydroxide particles;
2) 0.5 L of sodium nitrate solution at pH 6-7 was added to the thorium hydroxide particles obtained in step 1), soaked, and allowed to stand for two years (the initial solid-liquid mixture contained 69327 Bq of ²²⁸Ra);
3) filtration was performed to obtain a filtrate, yielding 0.5 L of a solution containing ²²⁸Ra, which was recorded as solution 1-1; simultaneously, the thorium hydroxide particles were obtained by filtration;
4) 0.5 L of sodium nitrate solution at pH 6-7 was added to the thorium hydroxide particles obtained by filtration in step 3), and soaked;
5) filtration was performed to obtain a filtrate, yielding 0.5 L of a solution containing ²²⁸Ra, which was recorded as solution 1-2; simultaneously, the thorium hydroxide particles were obtained by filtration;
6) 0.5 L of sodium nitrate solution at pH 6-7 was added to the thorium hydroxide particles obtained by filtration in step 5), and soaked;
7) filtration was performed to obtain a filtrate, yielding 0.5 L of a solution containing ²²⁸Ra, which was recorded as solution 1-3.

After the test, the total ²²⁸Ra content in solution 1-1 is 38347 Bq, the total ²²⁸Ra content in solution 1-2 is 14828 Bq, and the total ²²⁸Ra content in solution 1-3 is 7481 Bq, totaling 60656 Bq, with a leaching rate of 87%.

Example 35 shows that the sum of the three leaching rates can reach 87%.

In this example, the leaching rate for multiple leachings is calculated as follows: 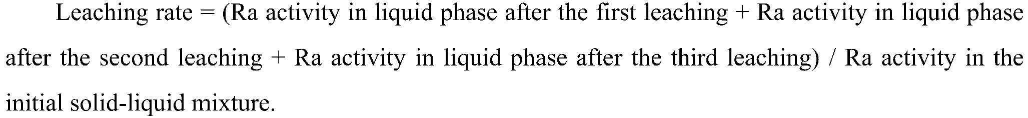 Leaching rate = (Ra activity in liquid phase after the first leaching + Ra activity in liquid phase after the second leaching + Ra activity in liquid phase after the third leaching) / Ra activity in the initial solid-liquid mixture.

In the examples, the unit of activity is Bq, the same below.

Example 36 Long-term multiple-round leaching of ²²⁴Ra from thorium hydroxide particles
1) 1000 mL of a 200 g/L natural thorium nitrate solution (containing about 1600 Bq/g of ²²⁸Th) was taken, and 2.2 mol/L sodium hydroxide solution was added to the solution until the pH of the solution reached 6-8. The liquid was recovered by low-speed centrifugation, yielding about 400 mL of thorium hydroxide particles;
2) 500 mL of sodium nitrate solution at pH 6-7 was added to the thorium hydroxide particles obtained in step 1), and soaked;
3) the mixture was allowed to stand for about 1 week (the initial solid-liquid mixture contained 241218 Bq of ²²⁴Ra );
4) the liquid was recovered by low-speed centrifugation, which was recorded as solution 2-1; simultaneously, the thorium hydroxide particles were obtained by filtration;
5) 500 mL of sodium nitrate solution at pH 6-7 was added to the thorium hydroxide particles obtained in step 4), and soaked;
6) the mixture was allowed to stand for about 1 week (the initial solid-liquid mixture contained 240678 Bq of ²²⁴Ra );
7) the liquid was recovered by low-speed centrifugation, which was recorded as solution 2-2; simultaneously, the thorium hydroxide particles were obtained by filtration;
8) 500 mL of sodium nitrate solution at pH 6-7 was added to the thorium hydroxide particles obtained in step 7), and soaked;
9) the mixture was allowed to stand for about 1 week (the initial solid-liquid mixture contained 220889 Bq of ²²⁴Ra );
10) the liquid was recovered by low-speed centrifugation, which was recorded as solution 2-3; simultaneously, the thorium hydroxide particles were obtained by filtration;
11) 500 mL of sodium nitrate solution at pH 7 was added to the thorium hydroxide particles obtained in step 10), and soaked;

After the test, the total ²²⁴Ra content in solution 2-1 is 123834 Bq (first round leaching rate of 51%), the total ²²⁴Ra content in solution 2-2 is 108273 Bq (second round leaching rate of 45%), and the total ²²⁴Ra content in solution 2-3 is 103532 Bq (third round leaching rate of 47%).

In this example: 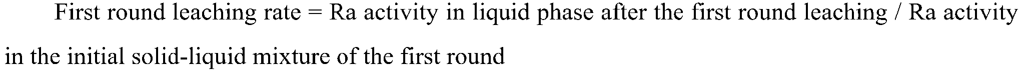 First round leaching rate = Ra activity in liquid phase after the first round leaching / Ra activity in the initial solid-liquid mixture of the first round 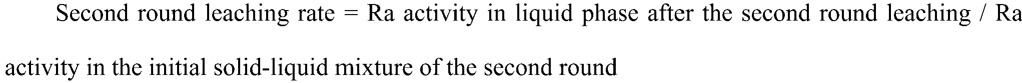 Second round leaching rate = Ra activity in liquid phase after the second round leaching / Ra activity in the initial solid-liquid mixture of the second round 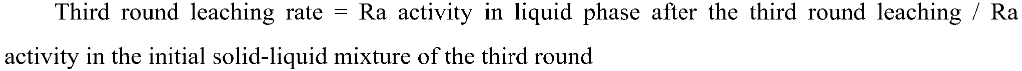 Third round leaching rate = Ra activity in liquid phase after the third round leaching / Ra activity in the initial solid-liquid mixture of the third round

Example 36 shows that the method of the present application can be used for continuous multiple rounds of radium extraction, with extraction rates of 45% to 51%, and no significant decrease in leaching rate is observed.

Although the present case has been disclosed above with the examples, they are not intended to limit the present case. Any person having ordinary knowledge in the relevant technical field may make some changes and modifications without departing from the spirit and scope of the present case. Therefore, the protection scope of the present case shall be defined by the scope of the appended patent application claims.

## Claims

1. A method for extracting decay daughters of thorium, wherein the method comprises:
a leaching step: mixing thorium hydroxide particles with a leaching solution, so that the decay daughters of thorium in the thorium hydroxide particles are dissolved in the leaching solution; and
a solid-liquid separation step: separating the thorium hydroxide particles mixed with the leaching solution from the liquid to obtain a solution containing the decay daughters of thorium.

2. The method according to claim 1, wherein prior to the leaching step, aging treatment is carried out, wherein the aging step comprises: placing the thorium hydroxide particles for a period of time to enrich the decay daughters of thorium.

3. The method according to claim 1, wherein the leaching solution is selected from one or more of water, nitrate salt solutions, hydrochloride salt solutions, sodium salt solutions, potassium salt solutions, calcium salt solutions, and ammonium salt solutions.

4. The method according to claim 3, wherein
the nitrate salt is selected from one or more of sodium nitrate, potassium nitrate, silver nitrate, magnesium nitrate, calcium nitrate, copper nitrate, iron nitrate, zinc nitrate, barium nitrate, aluminum nitrate, cesium nitrate, ammonium nitrate, and ferrous nitrate;
the hydrochloride salt is selected from one or more of sodium chloride, potassium chloride, magnesium chloride, calcium chloride, copper chloride, iron chloride, zinc chloride, barium chloride, aluminum chloride, cesium chloride, ammonium chloride, and ferrous chloride;
the sodium salt is selected from one or more of sodium chloride, sodium bicarbonate, sodium bisulfate, sodium nitrate, sodium hydrogen phosphate, sodium dihydrogen phosphate, sodium sulfide, sodium sulfite, sodium bisulfite, sodium nitrite, sodium ferrate, sodium fluoride, sodium bromide, sodium iodide, sodium formate, sodium acetate, and sodium oxalate;
the potassium salt is selected from one or more of potassium chloride, potassium bicarbonate, potassium bisulfate, potassium nitrate, potassium hydrogen phosphate, potassium dihydrogen phosphate, potassium sulfide, potassium sulfite, potassium bisulfite, potassium nitrite, potassium ferrate, potassium fluoride, potassium bromide, potassium iodide, potassium formate, potassium acetate, and potassium oxalate;
the calcium salt is selected from one or more of calcium chloride, calcium bicarbonate, calcium bisulfate, calcium nitrate, calcium hydrogen phosphate, calcium dihydrogen phosphate, calcium bisulfite, calcium nitrite, calcium bromide, calcium iodide, calcium formate, and calcium acetate;
the ammonium salt is selected from one or more of ammonium chloride, ammonium bicarbonate, ammonium bisulfate, ammonium nitrate, ammonium hydrogen phosphate, ammonium dihydrogen phosphate, ammonium sulfide, ammonium sulfite, ammonium bisulfite, ammonium nitrite, ammonium ferrate, ammonium fluoride, ammonium bromide, ammonium iodide, ammonium formate, ammonium acetate, and ammonium oxalate.

5. The method according to claim 1, wherein the pH of the leaching solution is 4 to 12.

6. The method according to claim 5, wherein the pH of the leaching solution is 6 to 8.

7. The method according to claim 1, wherein relative to 1 volume of the thorium hydroxide particles, the leaching solution is 0.5 to 20 volumes.

8. The method according to claim 1 or 2, wherein the leaching step and the solid-liquid separation step are repeated to further extract the decay daughters.

9. The method according to claim 1, wherein the thorium hydroxide particles are prepared as follows:
adding a base containing hydroxide ions or an aqueous solution thereof to a solution containing thorium ions to obtain a mixed solution, adjusting the pH of the mixed solution to 4 to 14, and after solid-liquid separation, obtaining the thorium hydroxide particles.

10. The method according to claim 1, wherein the diameter of the thorium hydroxide particles is 100 nm to 1 mm.

11. The method according to claim 9, wherein the pH of the mixed solution is 4 to 10.

12. The method according to claim 9, wherein the base containing hydroxide ions is selected from one or more of aqueous ammonia, sodium hydroxide, calcium hydroxide, potassium hydroxide, barium hydroxide, and cesium hydroxide.

13. The method according to claim 12, wherein the base containing hydroxide ions is sodium hydroxide.

14. The method according to claim 1, wherein a method for the solid-liquid separation is selected from one or more of filtration, centrifugation, decantation, and natural sedimentation.

15. The method according to claim 14, wherein the method for the solid-liquid separation is filtration.
